# EUROPÄISCHE PATENTSCHRIFT

(11) **EP 1 038 644 B1**
(45) Veröffentlichungstag und Bekanntmachung des Hinweises auf die Patenterteilung: **06.06.2007**
(21) Anmeldenummer: 00104733.1
(22) Anmeldetag: 04.03.2000
(51) Int. Cl.: B27C 5/02, B23Q 35/128, B27D 5/00

(54) **Durchlaufmaschine mit einer nachgeführten Fräsvorrichtung**
Milling device with tracking means in a pass-through machine
Dispositif de fraisage avec dispositif de suivi dans une machine pour le traitement en continu

(30) Priorität: 25.03.1999 DE 19913696
(43) Veröffentlichungstag der Anmeldung: 27.09.2000
(73) Patentinhaber: IMA Klessmann GmbH Holzbearbeitungssysteme, 32312 Lübbecke (DE)
(72) Erfinder: Heidemann, Hans-Dieter, 32545 Bad Oeynhausen (DE); Nope, Thomas, 31737 Rinteln (DE); Hielscher, Ulrich, 36720 Dohnsen (DE)
(74) Vertreter: Patentanwälte Thielking & Elbertzhagen

(56) Entgegenhaltungen:
- DE-A- 2 315 389
- DE-A- 2 928 649
- DE-A- 4 443 753
- US-A- 5 427 159

## Beschreibung

Die Erfindung bezieht sich auf eine Maschine zur Bearbeitung plattenförmiger Werkstücke im Durchlauf der im Oberbegriff des Patentanspruchs 1 näher bezeichneten Art.

In bekannter Ausführung einer solchen Maschine besteht die Abtasteinrichtung aus einer auf den Oberseiten der Werkstücke abwälzenden Tastrolle, deren Diametralebene lotrecht zu der Durchlaufebene der Werkstücke mit der ebenfalls senkrecht zu dieser Durchlaufebene stehenden Diametralebene des Fräsers fluchten muß. Die Tastrolle ist folglich in der Durchlaufrichtung gesehen exakt auf der Höhe des Fräswerkzeugs angeordnet. Die Tastrolle ist mechanisch mit dem Fräswerkzeug verbunden, damit das Fräswerkzeug den von der Tastrolle erfaßten Werkstückunebenheiten nachfolgen und Bearbeitungen ausführen kann, die genau an der Werkstückoberseite oder parallel dazu vorgenommen werden müssen. Vor allem gehört hierzu das Bündigfräsen von Kantenmaterial, welches auf die in Durchlaufrichtung liegenden Schmalflächenseiten der Werkstücke mit Überstand nach oben und unten hin aufgebracht worden ist. Um die Tastrolle von dem Gewicht ihrer Aufhängung und des Fräsaggregates zu entlasten, kann sie entgegen der Schwerkraftrichtung mittels einer mechanischen oder pneumatischen Feder beaufschlagt werden, die jedoch nicht verhindern kann, daß bei der Auslenkung von der Durchlaufebene weg die gesamte Masse der Fräseinrichtung beschleunigt werden muß. Beim Nachfolgen in Richtung zur Durchlaufebene hin bedingt eine solche Gewichtskompensation erst recht eine Trägheit des Abtastvorganges. Bei höheren Durchlaufgeschwindigkeiten von beispielsweise mehr als 100 m/min arbeitet daher die bekannte Abtasteinrichtung ungenau, was dazu führt, daß das Fräswerkzeug nicht mehr exakt den Oberflächenunebenheiten der Werkstücke nachgeführt wird.

Aus dem Dokument DE 2 315 389 A ist eine Holzbearbeitungsmaschine bekannt, mit der Werkstücke unterschiedlicher Dikke im Durchlauf bearbeitet werden. Die Maschine weist einen von den Werkstücken durchlaufenen Förderkanal mit Vorschubrollen oder einem Vorschubband auf, dessen Durchlaßhöhe zur Erzielung eines einwandfreien Werkstücktransports mittels eines Verstellmotors einstellbar ist. Um die Durchlaßhöhe des Förderkanals selbstätig in Abhängigkeit von der Werkstückdicke einstellen zu können, ist eine Fühlereinrichtung zur Erfassung der Werkstückdicke vorgesehen, die mit entweder mechanischen oder optischen Tastelementen versehen ist. Mit dieser Fühlereinrichtung wird eine Höhenverstellung der Werkstück-Vorschubvorrichtung nur dann vorgenommen, wenn auf ein durchgelaufenes Werkstück ein Werkstück mit unterschiedlicher Dicke folgt.

Der Erfindung liegt die Aufgabe zugrunde, bei einer Maschine der eingangs genannten Art eine reaktionsschnellere Abtasteinrichtung zur Erfassung der Oberflächenunebenheiten jedes Werkstücks zu schaffen, welche die Werkstückoberseiten berührungslos abtastet.

Diese Aufgabe wird mit einer die Merkmale des Patentanspruchs 1 aufweisenden Maschine gelöst.

Für die Erfindung ist wesentlich, daß der optische Sensor die Werkstückoberseiten der durchlaufenden Werkstücke, unter denen sowohl die obenliegenden Seiten als auch die untenliegenden Seiten der Werkstücke zu verstehen sind, berührungslos abtastet. Solche optischen Sensoren sind an sich bekannt, sie projizieren auf die Werkstückoberseite einen Lichtpunkt, dessen Lage von einem optischen System unter einem vom Lichtstrahl abweichenden Winkel erfaßt wird. Wandert der Lichtpunkt, ändert sich dieser Winkel und es kann nach der Dreiecksgeometrie die Abstandsänderung des Lichtpunktes ermittelt werden. Das Fräsaggregat bzw. der Fräser wird über einen ausreichend schnell reagierenden Stellantrieb zugestellt, vor allem kann hier eine sonst gelegentlich störende Tastrolle entfallen. Zum Durchlaufen des Abstandes zwischen der Stelle, an welcher der optische Sensor die jeweilige Werkstückoberseite abtastet und der Eingriffsstelle des Fräsers benötigen die Werkstücke eine gewisse Zeit, und diese Zeitspanne bietet den Vorteil, in der elektrischen und elektronischen Auswerteinheit die Stellgröße für den Stellantrieb des Fräsaggregates zu bilden, wobei erforderlichenfalls Korrekturfaktoren berücksichtigt werden können. Der räumliche Abstand des optischen Sensors von dem Fräser bietet den Vorzug, daß der beim spangebenden Bearbeiten der Werkstücke, die aus Holz- oder Holzersatzstoffen bestehen, unvermeidliche Staub den Abtastvorgang nicht merklich beeinträchtigt, denn hierdurch steht genügend Platz zur Verfügung, um eine entsprechende

Staubabschirmung, die beispielsweise mittels Spülluft vorgenommen werden kann, vorsehen zu können.

Vorteilhafte Ausgestaltungsmerkmale der Erfindung ergeben sich aus den Unteransprüchen.

Die Erfindung wird nachfolgend anhand der Zeichnung an Ausführungsbeispielen noch näher erläutert. Dabei zeigen:
- Fig. 1: eine schematische Seitansicht mit Blockschaltbild einer Fräsvorrichtung mit Abtasteinrichtung und
- Fig. 2: in gleicher Darstellung eine solche Vorrichtung in abgewandelter Ausführung.

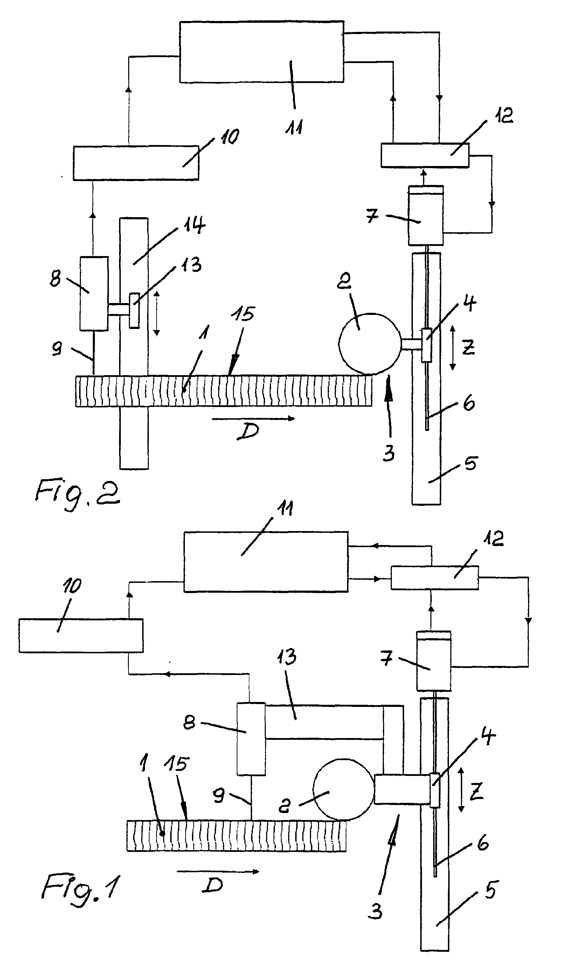

Figur 1 zeigt im einzelnen ein plattenförmiges Werkstück 1, welches in einer nicht näher dargestellten Durchlaufmaschine auf einer entsprechenden Transportvorrichtung in der Richtung des dargestellten Pfeiles D mit gleichbleibender Geschwindigkeit befördert wird. Selbstverständlich wird in einer solchen Durchlaufmaschine eine Folge derartiger Werkstücke 1 bearbeitet, wozu u.a. spangebende Arbeiten gehören, die über die gesamte Länge der durchlaufenden Werkstücke 1 in der Durchlaufrichtung vorgenommen werden. Unter anderem zählt hierzu das Bündigfräsen von auf die Werkstückschmalflächenseiten aufgebrachten Kantenmaterialien, die in der Regel an den obenliegenden und untenliegenden Werkstückoberseiten vorstehen. Diese Bearbeitungen werden mittels eines Fräsers 2 eines Fräsaggregates 3 vorgenommen, wobei es erforderlich ist, den Fräser 2 oder das gesamte Fräsaggregat 3 den Unebenheiten der Werkstückoberseiten 15 nachfolgen zu lassen.

Dazu ist das Fräsaggregat 3 mittels eines Supports 4 an einer Zustelleinrichtung 5 mit einer Linearführung 6 bzw. Linearachse angeordnet. Diese Linearachse erstreckt sich senkrecht zu der Durchlaufebene der Werkstücke 1, was durch den Pfeil Z veranschaulicht ist. Entlang der Linearführung 6 kann das Fräsaggregat 3 mit dem Fräser 2 verfahren werden, dazu dient ein Stellantrieb 7, der so ausgelegt ist, daß auch bei schnellem Durchlauf der Werkstücke 1 an dem Fräser 2 vorbei ein Nachführen entlang den Werkstückunebenheiten an den Werkstückoberseiten 15 mit entsprechender Beschleunigung und Geschwindigkeit des Fräsaggregates 3 in der Z-Richtung möglich ist.

Dafür ist eine Abtasteinrichtung erforderlich, welche die erwähnte Werkstückunebenheiten erfaßt. Dazu dient ein optischer Sensor 8, der mittels eines lotrecht zur Durchlaufebene der Werkstücke 1 gerichteten Lichtstrahls 9 auf den Werkstückoberseiten 15 jeweils einen Lichtpunkt erzeugt, dessen Abstand von dem optischen Sensor 8 gemessen wird. Aus dem dadurch gewonnenen Abstandssignal wird diejenige Stellgröße ermittelt, um die der Stellantrieb 7 jeweils in Z-Richtung das Fräsaggregat 3 verfährt. Dies geschieht natürlich erst dann, wenn das Werkstück 1 die Wegstrecke zwischen der jeweiligen Abtaststelle und dem Fräser 2 des Fräsaggregates 3 zurückgelegt hat, denn der Fräser 2 und die Abtaststelle sind räumlich voneinander getrennt angeordnet, so befindet sich die Abtaststelle in Durchlaufrichtung D der Werkstücke 1 gesehen in Abstand vor dem Fräser 2.

Das vom optischen Sensor 8 gelieferte Signal wird einer Meßwertverarbeitung 10 zugeleitet, die ein abstandsproportionales Signal an eine Steuerungs- und Regelungsvorrichtung 11 weitergibt. Von hier aus wird ein Servosteller 12 angesteuert, der unmittelbar die Steuerung des Stellantriebs 7 veranlaßt.

Für den Durchlauf von der jeweiligen Abtaststelle des Lichtstrahls 9 des optischen Sensors 8 bis zur Eingriffsstelle des Fräsers 2 benötigen die Werkstücke 1 eine bestimmte Zeitspanne. Während dieser Dauer bildet die gesamte Auswerteinheit 10 - 12 für den Stellantrieb 7 die entsprechende Stellgröße, um über die Zustelleinrichtung 5 den Fräser 2 weiter zur Werkstückdurchlaufebene hin oder von dieser weg zu verfahren. Diese Zeitspanne wird in der Auswerteinheit 10 - 12 berücksichtigt, um den Fräser 2 entsprechend zeitverzögert zu verfahren. Dadurch steht in der Auswerteinheit 10 - 12 genügend Zeit zur Verfügung, um die für den Stellantrieb 7 benötigte Stellgröße zu bilden, wo bei auch gewisse Korrekturfaktoren für etwaige Störgrößen berücksichtigt werden können.

Der optische Sensor 8 und der Fräser 2 sind räumlich voneinander getrennt, so daß bei der spangebenden Bearbeitung durch den Fräser 2 entstehender Staub von dem optischen Sensor 8 durch geeignete Abschirmungen, wie beispielsweise Spülluft, ferngehalten werden kann. Bei den üblichen optischen Sensoren 8 ist der Meßbereich begrenzt, weswegen bei Werkstücken 1 unterschiedlicher Dicke der vom optischen Sensor 8 erfaßbare Abstandsbereich nicht ausreichend sein kann. Um deshalb den Abstandsmeßbereich zu erweitern, ist beim Ausführungsbeispiel nach Figur 1 der optische Sensor 8 an einem Hilfssupport 13 angeordnet, der mechanisch mit dem Support 4 für das Fräsaggregat 3 verbunden ist. Da sich in der Regel bei dickeren Werkstücken 1 auch die Eingriffsstelle für den Fräser 2 in Z-Richtung verschiebt, was in der Maschinensteuerung und im Bearbeitungsprogramm der üblicherweise programmgesteuerten Maschine berücksichtigt werden kann, kann auf diesem Wege zugleich auch der optische Sensor 8 verschoben werden.

Grundsätzlich kann die Verschiebung des optischen Sensors 8 auch mechanisch unabhängig von dem Fräsaggregat 3 in Z-Richtung vorgenommen werden, dies zeigt Figur 2. Hier ist der Hilfssupport 13 für den optischen Sensor 8 mittels einer unabhängigen Zustelleinrichtung 14 verfahrbar, deren Ansteuerung in Abhängigkeit von der Dicke der jeweils zu bearbeitenden Werkstücke 1 erfolgt.

## Patentansprüche

1. Maschine zum Bearbeiten von plattenförmigen Werkstücken aus Holz oder Holzersatzstoffen, insbesondere für den Möbel- und Innenausbau, mit einem Fräsaggregat (3), dessen Fräser (2) den Oberflächenunebenheiten der durchlaufenden Werkstücke (1) nachgeführt wird, wozu das Fräsaggregat (3) und/oder der Fräser (2) an einem Support (4) mit einem Stellantrieb (7) relativ zu der Ebene der durchlaufenden Werkstücke (1) verfahrbar angeordnet sind, und ferner mit einer die Oberflächenunebenheiten der Werkstücke (1) abtastenden, den Stellantieb (7) steuernden Abtasteinrichtung,
**dadurch gekennzeichnet,**
**daß** die Abtasteinrichtung aus einem optischen Sensor (8) besteht, der in einem räumlichen Abstand von dem Fräser (2) derart angeordnet ist, daß er an einer Stelle entgegen der Durchlaufrichtung in Abstand vor dem Fräser (2) die Werkstückoberseiten (15) abtastet, wobei eine Auswerteinheit (10-12) vorgesehen ist, die den Stellantrieb (7) entsprechend zeitverzögert steuert.

2. Maschine nach Anspruch 1,
**dadurch gekennzeichnet,**
**daß** der optische Sensor (8) entgegen der Durchlaufrichtung vor dem Fräser (2) angeordnet ist.

3. Maschine nach Anspruch 1 oder 2,
**dadurch gekennzeichnet,**
**daß** der optische Sensor (8) den Abstand eines auf den Werkstückoberseiten (15) erzeugten Lichtpunktes in einem begrenzten Abstandsbereich erfaßt und daß er zwecks Erweiterung seines Abstandsmeßbereichs an einem relativ zur Durchlaufebene der Werkstücke (1) verfahrbaren Hilfssupport (13) angeordnet ist.

4. Maschine nach Anspruch 3,
**dadurch gekennzeichnet,**
**daß** der Hilfssupport (13) für den optischen Sensor (8) an einer unabhängigen Zustelleinrichtung (14) angeordnet ist.

5. Maschine nach Anspruch 3,
**dadurch gekennzeichnet,**
**daß** der Hilfssupport (13) für den optischen Sensor (8) mit dem Support (4) für das Fräsaggregat (3) mechanisch gekuppelt ist.

## Claims

1. Machine for finishing plate-type workpieces made of wood or wood substitutes, more particularly for furniture and interior fittings, with a milling assembly (3) whose milling cutter (2) tracks the surface irregularities of the workpieces (1) passing through, to which end the milling assembly (3) and/or the milling cutter (2) is/are mounted on a support (4) movable by a servo drive (7) relative to the plane of the workpieces (1) passing through, and furthermore with a scanning device which scans the surface irregularities of the workpieces (1) and controls the servo drive (7),
**characterised in that**
the scanning device consists of an optical sensor (8) which is mounted at a spatial distance from the milling cutter (2) so that it scans the top sides (15) of the workpieces at a point opposite the pass-through direction at a distance before the milling cutter (2), wherein an evaluator unit (10-12) is provided which controls the servo drive (7) with a corresponding time delay.

2. Machine according to claim 1,
**characterised in that**
the optical sensor (8) is mounted in front of the milling cutter (2) against the pass-through direction.

3. Machine according to claim 1 or 2,
**characterised in that**
the optical sensor (8) detects the distance of a light point produced on the top sides (15) of the workpiece in a restricted distance range and that for the purpose of widening its distance measuring range it is mounted on an auxiliary support (13) which is able to move relative to the pass-through plane of the workpieces (1).

4. Machine according to claim 3,
**characterised in that**
the auxiliary support (13) for the optical sensor (8) is mounted on an independent side unit (14).

5. Machine according to claim 3,
**characterised in that**
the auxiliary support (13) for the optical sensor (8) is coupled mechanically to the support (4) for the milling assembly (3).

## Revendications

1. Machine pour l'usinage de pièces en forme de panneaux en bois ou en matériaux de remplacement du bois, en particulier pour la fabrication de meubles et l'aménagement intérieur, avec un dispositif de fraisage (3) dont la fraise (2) suit les aspérités des surfaces des pièces (1) qui défilent, le dispositif de fraisage (3) et / ou la fraise (2) étant agencés, dans ce but, mobiles par rapport au plan de passage des pièces (1), sur un support (4) équipé d'un mécanisme de commande (7), et, de plus, avec un dispositif d'exploration balayant les aspérités des surfaces des pièces (1), lequel commande le mécanisme de commande (7),
**caractérisé en ce que**
le dispositif d'exploration consiste en un capteur optique (8) qui est agencé à distance de la fraise (2) de sorte qu'il balaie les surfaces (15) de la pièce à un endroit situé en amont, à distance de la fraise, dans la direction de déplacement de celle-ci, une unité d'évaluation (15), qui commande le mécanisme de commande de manière appropriée, décalée dans le temps, étant prévue.

2. Machine selon la revendication 1,
**caractérisée en ce que**
le capteur optique (8) est disposé en amont de la fraise (2), à l'opposé de la direction de passage.

3. Machine selon revendication 1 ou 2,
**caractérisée en ce que**
le capteur optique (8) capte, dans une plage de distance imitée, la distance d'un point lumineux généré sur les surfaces (15) des pièces et que, pour élargir sa plage de mesure de distance, il est agencé sur un support auxiliaire (13), mobile par rapport au plan de passage des pièces (1).

4. Machine selon la revendication 3,
**caractérisée en ce que**
le support auxiliaire (13), prévu pour le capteur optique (8), est agencé sur un dispositif de réglage (14) indépendant.

5. Machine selon la revendication 3,
**caractérisée en ce que**
le support auxiliaire (13), prévu pour le capteur optique (8), est couplé mécaniquement avec le dispositif de fraisage (3).
